# FASCICULE DE BREVET EUROPEEN

(11) **EP 2 484 086 B1**
(45) Date de publication et mention de la délivrance du brevet: **12.09.2018**
(21) Numéro de dépôt: 10774247.0
(22) Date de dépôt: 29.09.2010
(51) Int. Cl.: H04L 29/08, H04L 29/06, H04L 12/24, H04L 12/28

(54) **TRANSCODAGE D'UN CONTENU MULTIMÉDIA DANS UN RESEAU UPnP**
TRANSKODIERUNG VON MEDIENINHALTEN IN EINEM UPNP-NETZ
TRANSCODING OF A MULTIMEDIA CONTENT IN AN UPNP NETWORK

(30) Priorité: 30.09.2009 FR 0956818
(43) Date de publication de la demande: 08.08.2012
(73) Titulaire: Orange, 75015 Paris (FR)
(72) Inventeur: AGRO, Roberto, F-92120 Montrouge (FR); MURPHY, Vincent, F-59110 La Madeleine (FR)
(86) Numéro de dépôt international: PCT/FR2010/052043
(87) Numéro de publication internationale: WO 2011/039467

(56) Documents cités:
- EP-A1- 1 679 827
- US-A1- 2005 138 137
- RITCHIE J ET AL: "UPnP AV Architecture: 0.83", DESIGN DOCUMENT MICROSOFT, XX, XX, 12 juin 2002 (2002-06-12), pages 1-22, XP002271673,

## Description

L'invention concerne le domaine de la restitution et du partage de contenus multimédia numériques et plus précisément une méthode de transcodage d'un contenu multimédia dans un réseau UPnP.

Dans le contexte de ce document, un dispositif est dit dispositif UPnP s'il est conforme au standard UPnP ou à un autre standard équivalent ou dérivé, (par exemple le standard défini par l'alliance DLNA, Digital Living Network Alliance), notamment s'il utilise un protocole de commande conforme à un tel standard. Un tel dispositif comprend au moins une entité UPnP / DLNA (appelée "device" dans le standard UPnP / DLNA), cette entité mettant en oeuvre au moins un service UPnP / DLNA.

Dans le cas d'utilisation de dispositifs UPnP, il n'existe pas moyen de convertir à la volée un contenu multimédia numérique afin de permettre une restitution de ce contenu sur un dispositif de restitution UPnP sélectionné pour cette restitution.

En effet, dans le standard UPnP, le dispositif de commande UPnP ("Control Point") ne permet que la sélection et la diffusion d'un contenu dont le type (audio, vidéo, image, texte) est compatible avec le dispositif de restitution UPnP sélectionné pour cette restitution.

Une première solution technique existante, décrite dans le document US 2005138137, consiste à modifier d'une part le serveur de contenus pour y intégrer des fonctions de transcodage et d'autre part à modifier le point de contrôle afin que celui-ci modifie l'URL qu'il fournira au dispositif de restitution pour indiquer le format demandé pour le contenu choisi. Le dispositif de restitution requera alors à l'URL modifiée du serveur de contenu le contenu à restituer déclenchant un transcodage dans le format indiqué en paramètre de l'URL modifiée du contenu stocké à l'adresse de l'URL originale incluse dans l'URL modifiée.

La mise en oeuvre de cette technique est lourde car elle nécessite la modification de plusieurs équipements de l'architecture UPnP. En outre, le point de contrôle commande un format en fonction des capacités du dispositif de restitution imposant au serveur de contenus d'être équipé de la bonne fonction de transcodage.

Une autre solution technique existante, décrite dans le document EP1890456, consiste, d'une part, à fournir un transcodeur autonome, capable de transcoder à la volée des contenus référencés par un serveur de contenus, et, d'autre part, à modifier le dispositif de restitution UPnP pour que celui-ci interroge le transcodeur en vue d'obtenir le contenu transcodé. Cette solution n'est pas efficace car elle suppose de modifier tous les dispositifs de restitution susceptibles d'être utilisés.

Un des buts de l'invention est de remédier à des problèmes, inconvénients ou insuffisances de l'état de la technique et/ou d'y apporter des améliorations.

L'invention concerne, selon un premier aspect, un dispositif de commande UPnP selon la revendication 1.

L'invention concerne, selon un deuxième aspect, un procédé de commande de restitution selon la revendication 14.

L'invention prévoit de modifier le comportement du dispositif de commande UPnP de manière à ce qu'il obtienne l'identifiant du contenu multimédia à restituer auprès d'un serveur de transcodage apte à transcoder ce contenu multimédia. Il en résulte que seul le dispositif de commande UPnP doit être modifié, et non chacun des dispositifs de restitution susceptibles d'être utilisés dans le réseau. La modification peut donc se faire de manière centralisée, c'est-à-dire par modification du dispositif de commande UPnP. Ceci est particulièrement efficace lorsque ce dispositif de commande UPnP est mis en oeuvre dans une passerelle du réseau apte à communiquer avec tous les équipements du réseau: l'opérateur gérant cette passerelle peut aisément effectuer la mise à jour de ce dispositif de commande UPnP.

En outre, l'invention ne nécessite pas de modifier le processus prévu dans UPnP pour commander la restitution d'un contenu par un dispositif de restitution, puisque seul l'identifiant désignant le contenu à restituer est modifié et non l'utilisation qui est faite de cet identifiant par les commandes UPnP utilisées pour piloter la restitution, notamment la commande UPnP nommée "SetAVTransportURI" via laquelle l'identifiant est transmis au dispositif de restitution.

L'invention se prête ainsi à une intégration simple dans les architectures de réseau UPnP existantes.

L'invention concerne, selon un troisième aspect, un serveur de transcodage d'un réseau selon la revendication 7.

L'invention concerne, selon un quatrième aspect, un procédé de transcodage d'un contenu multimédia à restituer selon la revendication 15.

Ce serveur est apte à générer l'identifiant destiné être utilisé pour la commande de la restitution du contenu multimédia et à fournir cet identifiant à un dispositif de commande UPnP selon l'invention. Les avantages énoncés plus haut pour le dispositif de commande selon l'invention sont transposables à ce serveur et au procédé mis en oeuvre par ce serveur.

Selon une implémentation, les différentes étapes du procédé de transcodage et du procédé de commande de restitution selon l'invention sont mises en oeuvre par un logiciel ou programme d'ordinateur, ce logiciel comprenant des instructions logicielles destinées à être exécutées par un processeur de données d'un dispositif de commande, respectivement du serveur de transcodage, et étant conçu pour commander l'exécution des différentes étapes de ce procédé.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Une autre implémentation concerne un support d'informations lisible par un ordinateur ou processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon une autre implémentation, l'invention est mise en oeuvre au moyen de composants logiciels et/ou matériels. Dans cette optique, le terme dispositif peut correspondre dans ce document aussi bien à un composant logiciel qu'à un composant matériel ou encore à un composant matériel programmable, avec ou sans processeur intégré.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le dispositif concerné. De la même manière, un composant matériel correspond à tout élément d'un ensemble matériel (ou hardware) apte à mettre en oeuvre une fonction ou un ensemble de fonctions, selon ce qui est décrit ci-dessous pour le dispositif concerné.

Des modes de réalisation préférés sont montrés à travers les revendications dépendantes.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système de communication intégrant un dispositif selon l'invention et un serveur selon l'invention;
- la figure 2 représente un organigramme d'un mode de réalisation du procédé
selon l'invention.

### Rappels sur le standard UPnP et sur DLNA

Dans ce document on fait référence aussi bien à des acronymes et abréviations utilisées dans le standard UPnP ou par l'alliance DLNA qui définit des extensions de ce standard.

Une architecture UPnP / DLNA de gestion de contenus multimédia comprend généralement :
- un ou plusieurs serveurs de contenus multimédia, appelés DMS (de l'anglais « *Digital Media Server* ») dans le contexte UPnP / DLNA; un tel serveur est une entité esclave stockant des contenus multimédia ;
- un ou plusieurs dispositifs de commande UPnP / DLNA, également appelé DMC (de l'anglais « *Digital Media Controler* ») ; un tel dispositif de commande DMC est une entité maître du réseau qui est apte à détecter les dispositifs UPnP présents dans un réseau, à déterminer quels sont les services qu'ils proposent, recevoir des événements de ces dispositifs et les commander en leur envoyant des commandes (appelées "actions" dans le standard UPnP) ;
- un ou plusieurs dispositifs de restitution UPnP / DLNA, sous forme chacun soit de dispositif de rendu appelés DMR (de l'anglais « Digital Media Renderer ») ou de dispositif de lecture appelés DMP (de l'anglais "Digital Media Player"); chaque dispositif de restitution étant une entité en charge de la restitution d'un contenu multimédia.

Un dispositif de commande DMC, couplé à une interface utilisateur du terminal incorporant ce dispositif de commande, permet à un utilisateur de sélectionner un contenu multimédia mis à disposition par un serveur de contenus DMS et de le restituer sur un dispositif de restitution DMR de son choix.

Selon le standard UPnP, la restitution d'un contenu multimédia comporte usuellement les étapes suivantes :
- le dispositif de commande DMC obtient du serveur de contenu DMS, par envoi d'une requête nommée "Browse", les identifiants des contenus multimédia référencé par le serveur de contenu DMS, afin que l'utilisateur puisse sélectionner un contenu multimédia à restituer;
- le dispositif de commande DMC spécifie au dispositif de rendu DMR l'identifiant du contenu multimédia à restituer en utilisant une requête d'initialisation, appelée action "S*etAVTransportURI » ;*
- le dispositif de commande DMC déclenche la restitution du contenu multimédia sur le dispositif de rendu DMR visé en envoyant une requête d'exécution, appelée action « *Play* » ;
- le dispositif de restitution DMR transmet alors au serveur de contenus DMS une requête pour l'obtention du contenu multimédia, en envoyant une requête nommée "GET" conforme au protocole HTTP.
- le serveur de contenus DMS transmet en réponse au dispositif de restitution DMR le contenu multimédia codé, par envoi de paquets de données conformément au protocole HTTP.

L'invention permet de conserver ce mode de fonctionnement et cette succession d'étapes afin de proposer un service de transcodage de contenus qui soit compatible avec tous les serveurs de contenus UPnP et dispositifs de restitution UPnP existant.

Dans le standard UPnP, lorsque le dispositif de restitution choisi est de type dispositif de rendu DMR, on parle d'un modèle à trois boîtes, car trois entités UPnP distinctes doivent intervenir pour la mise en oeuvre de la restitution d'un contenu (DMS + DMC + DMR)

Il est à noter que les dispositifs de restitution de type DMP mettent en oeuvre les fonctions d'une entité DMC et celles d'un dispositif de restitution DMR. Ainsi, dans le cas où le dispositif sélectionné pour la restitution est de type DMP, ce dispositif dialogue directement avec le serveur de contenus à la fois pour obtenir des métadonnées de contenu et pour obtenir le contenu proprement dit. On parle dans ce cas de modèle à deux boîtes dans le cadre de UPnP / DLNA, car deux entités UPnP / DLNA distinctes doivent intervenir pour la mise en oeuvre de la restitution d'un contenu (DMS + DMP).

Comme cela sera décrit plus loin, l'invention est avantageusement applicable aussi bien au cas d'utilisation d'un modèle à deux boîtes ou que d'un modèle à trois boîtes.

### Description d'un mode particulier de réalisation

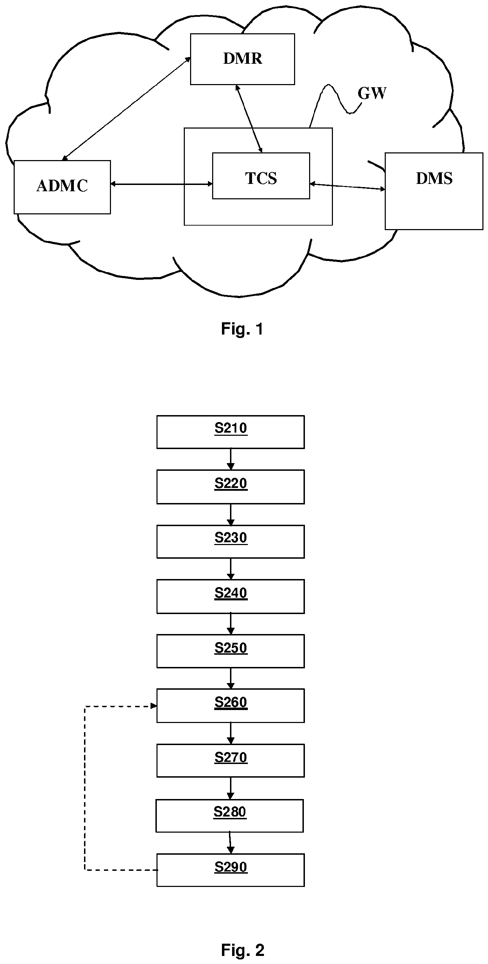

L'invention est décrite dans le cas de son application à un réseau domestique 10, comprenant, comme représenté à la figure 1, les éléments principaux suivants :
- un serveur de contenu conforme au standard UPnP, référencé DMS;
- un dispositif de rendu conforme au standard UPnP, référencé DMR, par exemple une chaîne Hifi UPnP;
- un dispositif de commande, conforme à l'invention et au standard UPnP, référencé ADMC, intégré dans un terminal T, sous forme par exemple d'ordinateur personnel ou de terminal mobile et doté d'une interface utilisateur;
- un serveur de transcodage, conforme à l'invention, référencé TCS, sous forme de serveur de transcodage.

Ces différents éléments sont aptes à communiquer à travers le réseau domestique 10. L'invention s'applique à tout réseau local utilisant comme protocole de communication IP, protocole utilisé pour l'envoi de commandes UPnP.

Les différentes entités UPnP décrites dans ce document sont réalisées sous forme de composant logiciel et/ou matériel mettant en oeuvre les fonctions décrites respectivement pour chacune de ces entités.

Selon le standard UPnP, un serveur de contenus DMS comprend une base de données pour mémoriser les métadonnées des contenus accessibles via ce serveur de contenus DMS. Cette base de données est accessible via le service UPnP nommé CDS (de l'anglais, "Content Directory Service") et est organisée sous forme d'une arborescence d'objets.

Pour chaque objet, un ou plusieurs champs de données sont utilisés pour mémoriser les propriétés de cet objet: ces champs de données constituent les métadonnées de cet objet.

Une des propriétés d'un objet est sa classe d'appartenance. Chaque objet est en effet affecté à une classe d'objet, le nom de cette classe d'objet étant mémorisé dans un champ de données nommé "upnp:class".

Les classes d'objet sont organisées de manière hiérarchisée et arborescente, certaines classes étant dérivées d'autres classes, selon ce qui est usuel en conception orientée objet. La racine de cette arborescence est la classe de base nommée "object". De cette classe de base "object", sont dérivées deux classes principales: d'une part, la classe "object.item", définissant un élément ou contenu multimédia (morceau de music, séquence vidéo, texte, etc), d'autre part, la classe "object.container", définissant un container ou ensemble de plusieurs contenus multimédia.

De la classe "object.container" est dérivée par exemple la classe "object.container.musicAlbum", définissant un album de musique comprenant plusieurs morceaux de musique.

De la classe "object.item" sont dérivées par exemple les classes "object.item.textItem", définissant un contenu texte, et "object.item.audioItem", définissant un contenu audio.

A chaque contenu multimédia (c'est-à-dire à chaque objet appartenant à la classe "object.item") sont associées une ou plusieurs ressources, associée chacune à un fichier de données de contenu.

Pour chaque ressource, un ou plusieurs champs de données sont utilisés pour mémoriser les propriétés de cette ressource. Ces champs de données font partie des métadonnées du contenu associé. Parmi les propriétés d'une ressource, il est connu d'utiliser dans le standard UPnP:
- un identifiant du fichier, mémorisé usuellement sous la forme d'un identifiant URI (de l'anglais « *Uniform Resource Identifier* »), servant à la fois d'identifiant de fichier et d'adresse de l'entité du réseau auprès de laquelle ce fichier peut être obtenu, en l'occurrence une adresse d'un serveur de contenus DMS;
- un format de codage, un fichier comprenant un contenu audio pouvant par exemple être disponible dans plusieurs formats (compressé MP3 ou non compressé PCM, etc);
- une résolution, lorsque le contenu est une photo ou un contenu vidéo disponible dans plusieurs résolutions;
- un identifiant du type MIME de codage des données du contenu codé dans le fichier ("audio/mpeg", "audio/mp3", ...);
- un protocole de transport à utiliser pour transporter les données du fichier lors de la restitution du contenu ("http-get", "rtsp", ...).

Le dispositif de rendu DMR met en oeuvre, conformément au standard UPnP, les services nommés "AVTransport", "ConnectionManager" et "RenderingControl".

L'invention ne nécessite aucune modification des serveurs de contenus DMS existants, ni des dispositifs de restitution DMR, ni des parties du standard UPnP concernant ces deux types d'entités.

L'invention repose notamment sur l'ajout de fonctions nouvelles à un dispositif de commande DMC conforme au standard UPnP, et sur la définition d'un nouveau composant logiciel, nommé ici serveur de transcodage, référencé TCS, avec lequel le dispositif de commande modifié, référencé ADMC (de l'anglais, Advanced Digital Media Controller), coopère pour la mise en oeuvre de l'invention. Le dispositif de commande conforme à l'invention sera nommé dans la suite de la description dispositif de commande avancé ADMC.

Le serveur de transcodage TCS est soit intégré en tant que service UPnP à une entité UPnP existante (DMC, DMR, DMP, DMS) de manière à former une entité UPnP ("device" selon la terminologie du standard UPnP / DLNA) unique, soit réalisé sous forme d'entité UPnP ("device" UPnP / DLNA) indépendante mettant en oeuvre uniquement un service de transcodage selon ce qui est décrit dans ce document pour le serveur de transcodage TCS. Il est réalisé au moyen de composants logiciels et/ou matériels mettant en oeuvre les fonctions décrites pour ce serveur de transcodage.

Dans l'exemple représenté à la figure 1, le serveur de transcodage TCS est intégré dans une passerelle domestique GW, servant d'interconnexion entre le réseau domestique 10 et le réseau Internet. De manière générale, le serveur de transcodage TCS peut être intégré dans tout équipement disposant des ressources nécessaires, en termes de mémoire et de processeur de données, pour mettre en oeuvre les fonctions du serveur de transcodage TCS: routeur, décodeur de télévision, set-top-box, ordinateur personnel, etc. Le serveur de transcodage TCS est mis en oeuvre au moyens de composants logiciels et / ou matériels, par exemple des cartes électroniques ou circuits intégrés spécifiques mettant en oeuvre des fonctions de transcodage étant susceptibles d'être utilisés en complément du processeur de données.

Dans la suite de la description, on suppose à titre d'exemple, que le serveur de transcodage TCS est mis en oeuvre sous forme de service UPnP indépendant. Dans ce cas, le dispositif de commande avancé ADMC est capable de détecter, grâce au mécanisme de découverte prévu dans le standard UPnP, la présence dans le réseau du serveur de transcodage TCS, comme celle de tout autre composant UPnP.

Le mécanisme de découverte prévu dans le standard UPnP permet à un composant UPnP, en l'occurrence au serveur de transcodage TCS, d'informer le ou les dispositifs de commande UPnP du réseau des services proposés par ce serveur de transcodage TCS. Réciproquement, quand un dispositif de commande UPnP est connecté au réseau, le mécanisme de découverte permet à ce dispositif de commande DMC de rechercher les dispositifs UPnP présents dans le réseau.

Dans les deux situations, un message contenant des informations sur le dispositif UPnP et au moins un des services proposés par le dispositif UPnP considéré est émis par ce dispositif UPnP. Le mécanisme de découverte UPnP utilise le protocole SSDP (Simple Service Discovery Protocol).

Le serveur de transcodage TCS met en oeuvre un service UPnP de transcodage de contenu, nommé ici "TransMedia", par application de fonctions de transcodage à des contenus multimédia.

Le serveur de transcodage TCS est conçu pour recevoir et traiter une commande de paramétrage, nommée ici "SetTransMedia". Une telle commande comprend une identification du contenu C1 à transcoder, ainsi que les paramètres de transcodage à utiliser. Les paramètres de transcodage comprennent soit une liste d'au moins une fonction de transcodage à appliquer et leurs éventuels paramètres associés, soit une identification du format cible dans lequel ce contenu doit être transcodé.

Le serveur de transcodage TCS est conçu pour, à réception d'une commande "SetTransMedia", réserver les éventuelles ressources nécessaires pour le transcodage du contenu C1: allocation mémoire, initialisation du processus de transcodage, paramétrages des fonctions de transcodage, etc. Puis le serveur de transcodage TCS génère un identifiant URI2 affecté par le serveur de transcodage TCS au contenu transcodé C2 et envoie cet identifiant URI2 en réponse à l'émetteur de cette commande.

De manière connue, conformément au standard UPnP, un identifiant URI1 est fourni par le serveur de contenus DMS avec les métadonnées du contenu C1: cet identifiant URI1 est utilisé par le serveur de contenus pour référencer le contenu C1, indiquer la localisation des données du contenu C1 et désigne le serveur de contenus DMS comme entité auprès de laquelle le contenu multimédia C1 est susceptible d'être obtenu.

Selon l'invention, les paramètres de transcodage et l'identifiant URI1 du contenu C1 à transcoder sont codés dans l'identifiant URI2 affecté au contenu transcodé de manière à ce que, en recevant cet identifiant URI2, le serveur de transcodage TCS soit capable de déterminer les paramètres de transcodage à appliquer lors du transcodage de ce contenu C1.

L'identifiant URI2 est en outre défini de telle sorte qu'il comprenne un identifiant URI1 du contenu C1 à transcoder. De cette manière, lorsque le serveur de transcodage TCS reçoit l'identifiant URI2, il sait quel est le contenu C1 à transcoder et est capable d'obtenir le contenu C1 à transcoder auprès du serveur de contenu DMS auprès duquel il est référencé.

L'identifiant URI2 est en outre défini de telle sorte qu'il désigne le serveur de transcodage TCS comme étant l'entité du réseau auprès de laquelle le contenu C2 transcodé est susceptible d'être obtenu. De cette manière, l'identifiant URI2 peut être utilisé en lieu et place de l'identifiant URI1 de départ, pour commander la restitution du contenu C1 par le dispositif de rendu DMR et obtenir auprès du serveur de transcodage TCS le contenu multimédia sous sa forme transcodée.

On comprend ainsi que l'identifiant URI2 est destiné à être transmis, à la place de l'identifiant URI1, au dispositif de restitution choisi (dispositif de rendu DMR, par exemple) pour la restitution du contenu C1. Par cette substitution d'un identifiant à un autre, on impose en fait une redirection au dispositif de restitution: ce dernier est redirigé de manière transparente pour lui, vers le serveur de transcodage désigné dans l'identifiant URI2 de substitution, charge étant au serveur de transcodage d'obtenir auprès du serveur de contenus DMS le contenu C1 à transcoder.

Les identifiants URI usuellement utilisés dans le standard UPnP sont effet adaptés à coder différentes informations. Selon un exemple, l'identifiant URI1 est de la forme
http://192.168.1.12:9800/DLNA/music/O0$1$5I72/Jason%20ls%20Reborn.mp3
et l'identifiant URI2 est de la forme
http://192.168.1.20:8600/transmedia/targetMedia=AUDIO/targetFormat=mp3,512 kbps,48khz,stereo/http://192.168.1.12:9800/DLNA/music/O0$1$5I72/Jason%20ls%20 Reborn.mp3.

Comme on peut le constater, cet identifiant URI2 comprend une sous-chaîne de caractères "targetFormat=mp3,512kbps,48khz,stereo" spécifiant le format de codage cible.

L'identifiant l'URI2 peut être constitué de différentes manières: soit en y insérant le format de codage cible, soit en y insérant la fonction de transcodage à utiliser, soit encore en y insérant un identifiant d'un processus logiciel qui a été initié par le serveur de transcodage TCS suite à la réception de la commande "SetTransMedia".

Selon un mode de réalisation, le serveur de transcodage TCS est conçu pour exécuter une succession de fonctions de transcodage sur un même contenu. Dans ce cas, une liste ordonnée de fonctions de transcodage doit être transmise au serveur de transcodage TCS, soit dans les paramètres de transcodage avec la commande "SetTransMedia", soit au moyen d'un ou plusieurs fichiers de configuration.

Le serveur de transcodage TCS est également conçu pour fournir sur requête une liste des fonctions de transcodage disponibles. Cette liste donne par exemple des couples de formats de transcodage, chaque couple (F1, F2) indiquant qu'un contenu encodé dans le format F1 est susceptible d'être converti en un contenu encodé dans le format F2.

Chaque fonction de transcodage consiste à effectuer une ou plusieurs fonctions de conversion de format, avec ou sans multiplexage / démultiplexage de données. Tout type de conversion de format est utilisable pour la mise en oeuvre de l'invention, notamment:
- une conversion vidéo vers audio, par exemple du format DivX en MP3, ou
- une conversion texte vers audio, la fonction de transcodage consistant dans ce cas en une vocalisation du texte de départ.

Ainsi grâce à l'invention, même si la classe (par exemple "object.item.textItem") d'un contenu à restituer est incompatible avec le dispositif de rendu DMR (par exemple chaîne Hi-Fi UPnP) choisi par l'utilisateur, il devient possible de restituer ce contenu sur ce dispositif de rendu DMR.

Plus classiquement, des fonctions de transcodage de format vidéo vers vidéo ou audio vers audio sont bien entendu envisageables. Par exemple, une conversion de AAC en MP3 pour du transcodage audio uniquement.

Le serveur de transcodage TCS est par exemple mise en oeuvre au moyen de composants logiciels existant, reposant par exemple sur l'architecture "DirectShow" ou sur les bibliothèques "ffmpeg".

Le dispositif de commande avancé ADMC est un dispositif de commande ("Control Point") conforme au standard UPnP. Le dispositif de commande avancé ADMC est en outre conçu pour détecter la présence du serveur de transcodage TCS, selon le mécanisme de découverte défini dans le standard UPnP, et pour invoquer par commande les fonctions UPnP déclarées par ce serveur de transcodage TCS.

Le dispositif de commande avancé ADMC est également conçu pour adapter la sélection de contenus ou celles des dispositifs de rendu par rapport aux fonctions de transcodages susceptibles d'être mises en oeuvre par le serveur de transcodage TCS: la liste des contenus, susceptibles d'être restitués sur un dispositif de rendu DMR donné, ne sera pas limitée aux contenus déjà encodés dans un format supporté par ce dispositif de rendu DMR, mais sera enrichie par les contenus susceptibles d'être transcodés par le serveur de transcodage TCS dans un format supporté par ce dispositif de rendu DMR.

Conformément au standard UPnP, le dispositif de commande avancé ADMC est susceptible, par envoi d'une commande nommée "Browse", d'obtenir une liste des protocoles et des types MIME des différentes ressources associées à un contenu référencé par le serveur de contenus DMS. En réponse à cette commande, le serveur de contenus DMS envoie les métadonnées du contenu, comprenant les informations demandées.

Conformément au standard UPnP, le dispositif de rendu DMR met en oeuvre également le service "ConnectionManager", au moyen duquel le dispositif de commande avancé ADMC est susceptible, par envoi d'une commande nommée "GetProtocolInfo", d'obtenir en retour une liste des protocoles et des types MIME que le dispositif de rendu DMR est capable d'interpréter et de décoder pour restituer une ressource d'un contenu codé. En réponse à cette commande, le dispositif de rendu DMR envoie une structure de données, nommée "Sink", comprenant les informations demandées.

Le dispositif de commande avancé ADMC est conçu pour vérifier, par comparaison des informations retournées respectivement par le dispositif de rendu DMR en réponse à la commande "GetProtocolInfo" et par le serveur de contenus DMS en réponse à la commande "Browse", si le dispositif de rendu DMR dispose des capacités nécessaires pour une restitution d'un contenu donné et, dans la négative, pour déterminer si le serveur de transcodage TCS propose une fonction de transcodage permettant de convertir le contenu à restituer dans un format supporté par le dispositif de restitution.

Les procédés selon l'invention sont décrits plus en détail par référence à la figure 2, dans le cas d'exemple où l'utilisateur du terminal T sélectionne en vue d'une restitution un contenu C1 de classe CL1 ayant une ressource R1 de paramètre "Protocollnfo" PI1 incompatible avec le type de contenu supporté par le dispositif de rendu DMR sélectionné pour la restitution.

Lors d'une étape initiale S200, le serveur de transcodage TCS met en oeuvre le mécanisme de découverte prévu dans le standard UPnP, en signalant sa présence et ses propriétés par l'envoi de messages SSDP, interceptés par le dispositif de commande avancé ADMC.

Lors de l'étape S200, le dispositif de commande avancé ADMC détecte ainsi la présence du serveur de transcodage TCS et obtient de ce serveur les informations sur le service de transcodage "TransMedia" mis en oeuvre par ce serveur, notamment une liste de fonctions de transcodage susceptibles d'être exécutées par le serveur de transcodage TCS.

A l'étape S210, le dispositif de commande avancé ADMC obtient du serveur de contenu DMS, au moyen d'une commande UPnP nommée "Browse", une liste de contenus référencés par ce serveur ainsi que les métadonnées de ces contenus et affiche cette liste sur un écran du terminal T.

Un utilisateur du terminal T sélectionne dans cette liste le contenu C1 et sélectionne le dispositif de rendu DMR pour la restitution de ce contenu. Le dispositif de commande avancé ADMC extrait des métadonnées du contenu C1 les informations sur la classe CL1 de ce contenu, la ressource R1 associée et le paramètre "Protocollnfo" PI1 défini pour cette ressource R1.

A l'étape S220, le dispositif de commande avancé ADMC envoie la commande "GetProtocolInfo" au dispositif de rendu DMR pour obtenir la liste des protocoles supportés par ce dispositif.

A réception de la réponse, le dispositif de commande avancé ADMC effectue un test de compatibilité entre les ressources du contenu C1 (sur la base des paramètres PI1 et CL1) et les protocoles supportés par le dispositif de rendu DMR.

Etant donné que, dans l'exemple illustré ici, le contenu C1 n'est pas compatible, le dispositif de commande avancé ADMC détermine s'il existe au moins une fonction de transcodage permettant de convertir le contenu C1 en un contenu C2 qui puisse être restitué sur le dispositif de rendu DMR. Si plusieurs fonctions de transcodage sont identifiées, le dispositif de commande avancé ADMC en choisit une, sur la base de règles de sélection ou de préférences utilisateur reposant par exemple sur des critères de performance tels que qualité / résolution obtenue pour le contenu transcodé ou temps de conversion.

A l'étape S230, le dispositif de commande avancé ADMC envoie au serveur de transcodage TCS une commande "SetTransMedia", identifiant le contenu C1 au moyen d'un identifiant URI1 et les paramètres de transcodage, notamment une identification de la fonction de transcodage choisie à l'étape S220. A réception d'une telle commande, le serveur de transcodage TCS prépare les ressources nécessaires puis envoie une réponse contenant un identifiant URI2 affecté au contenu C2 transcodé à générer, cet identifiant indiquant que le contenu C2 est susceptible d'être obtenu auprès du serveur de transcodage TCS.

A l'étape S240, le dispositif de commande avancé ADMC génère des métadonnées pour le contenu C2 à partir des métadonnées du contenu C1 en remplaçant dans ces métadonnées la classe CL1, la ressource R1 et le paramètre "Protocollnfo" PI1 par celles du contenu C2 à générer.

A l'étape S250, suite à une demande de l'utilisateur du terminal T, la restitution du contenu C1 est déclenchée par le dispositif de commande avancé ADMC: celui-ci envoie dans ce but, au dispositif de rendu DMR visé, une commande UPnP nommée "SetAVTransportURI", comprenant des paramètres de restitution du contenu C2, les métadonnées générées pour le contenu C2 et l'identifiant URI2 du contenu C2 tel qu'obtenu du serveur de transcodage TCS. Le dispositif de commande avancé ADMC envoie ensuite une commande UPnP nommée "Play", pour déclencher la restitution du contenu C2.

A l'étape S260, à réception de la commande "Play", le dispositif de rendu DMR détermine, à partir de l'identifiant URI2, quelle est l'entité auprès de laquelle le contenu C2 peut être obtenu: en l'occurrence le serveur de transcodage TCS. Le dispositif de rendu DMR envoie au serveur de transcodage TCS une requête HTTP de type "GET", comprenant l'identifiant URI2 fourni à l'étape S240, afin d'obtenir les données du contenu C2.

A l'étape S270, à réception de la requête HTTP "GET", le serveur de transcodage TCS extrait de l'identifiant URI2, l'identifiant URI1 contenant une identification du serveur de contenus DMS auprès duquel est référencé le contenu C1 à transcoder. Le serveur de transcodage TCS envoie alors au serveur de contenus DMS une requête HTTP "GET" comprenant l'URI1, afin d'obtenir les données du contenu C1.

A l'étape S280, à réception des données du contenu C1, le serveur de transcodage TCS applique à ces données la fonction de transcodage sélectionnée par le dispositif de commande avancé ADMC lors de l'envoi de la commande "SetTransMedia" ou identifiée dans l'identifiant URI2 reçu. Le serveur de transcodage TCS envoie, en réponse à la commande HTTP "GET" reçue à l'étape S250, les données du contenu C2 générées par transcodage des données du contenu C1. Le serveur de transcodage TCS opère ainsi une conversion à la volée du contenu C1.

A l'étape S290, à réception des données du contenu C2, le dispositif de rendu DMR procède à la restitution du contenu C2.

Dans le cas, où le contenu C1 demande une restitution sous forme de flux continu (en "streaming" selon la terminologie anglo-saxonne) et que les données du contenu C1 doivent être transmises paquet par paquet au dispositif de rendu DMR, les étapes S260 à S290 sont répétées pour chaque paquet à transmettre.

De manière générale, lors de l'obtention des données du contenu C2, le serveur de transcodage TCS sert de relais de communication entre le dispositif de rendu DMR et le serveur de contenus DMS pour le transcodage à la volée des données du contenu C1 d'origine.

Le procédé décrit par référence à la figure 2 est transposable au cas d'utilisation d'un modèle à deux boîtes. Dans ce cas, les étapes mises en oeuvres par le dispositif de commande avancé ADMC et le dispositif de rendu DMR sont mises en oeuvre par le dispositif de restitution DMP, avec la seule différence que les envois de commandes "Play" et "SetAVTransportURI" de l'étape S250 ne sont pas exécutées, le dispositif de restitution DMP n'ayant effectivement pas besoin de transmettre l'identifiant URI obtenu pour le contenu transcodé puisqu'il le connaît déjà.

Ainsi l'invention est applicable à un dispositif de restitution DMP (UPnP ou DLNA) d'un réseau, comprenant un module pour, en vue d'une restitution d'un contenu multimédia référencé par un serveur de contenus DMS de ce réseau, obtenir auprès d'un serveur de transcodage TCS l'identifiant URI2 du contenu multimédia à restituer. L'étendue de l'invention est définie par les revendications ci-après.

## Revendications

1. Dispositif de commande UPnP (ADMC) d'un réseau, comprenant
- des moyens pour recevoir d'un serveur de contenus (DMS) un premier identifiant d'un contenu multimédia à restituer,
- des moyens pour envoyer à un serveur de transcodage (TCS) une commande identifiant le contenu multimédia au moyen du premier identifiant,
- des moyens pour obtenir un deuxième identifiant auprès du serveur de transcodage (TCS), les moyens pour obtenir le deuxième identifiant étant en outre adaptés pour recevoir le deuxième identifiant suite à l'envoi du premier identifiant au serveur de transcodage par les moyens pour envoyer ladite commande, le deuxième identifiant étant associé à un contenu multimédia transcodé à générer par transcodage du contenu multimédia par le serveur de transcodage (TCS),
- des moyens pour commander une restitution dudit contenu multimédia transcodé par un dispositif de restitution (DMR), les moyens pour commander utilisant le deuxième identifiant obtenu à la place du premier identifiant en transmettant le deuxième identifiant au dispositif de restitution.

2. Dispositif selon la revendication 1, dans lequel le deuxième identifiant désigne ledit serveur de transcodage comme étant l'entité auprès de laquelle le contenu multimédia transcodé est susceptible d'être obtenu.

3. Dispositif selon la revendication 1, comprenant en outre des moyens pour transmettre au serveur de transcodage (TCS) des paramètres de transcodage afin d'obtenir en retour le deuxième identifiant.

4. Dispositif selon la revendication 1, comprenant en outre des moyens pour transmettre audit dispositif de restitution des métadonnées associées au contenu multimédia transcodé, générées par modification des métadonnées du contenu référencé.

5. Dispositif selon la revendication 1, comprenant en outre des moyens pour obtenir du serveur de transcodage une liste de fonctions de transcodage susceptibles d'être appliquées par le serveur de transcodage.

6. Dispositif selon la revendication 1, comprenant en outre des moyens pour détecter la présence dans le réseau dudit serveur de transcodage.

7. Serveur de transcodage (TCS) d'un réseau, comprenant
- des moyens de transcodage pour générer un contenu multimédia transcodé par transcodage d'un contenu multimédia référencé par un serveur de contenus (DMS) dudit réseau;
- des moyens pour générer et fournir un deuxième identifiant à un dispositif de commande UPnP (ADMC) du réseau, suite à une réception d'un premier identifiant du contenu multimédia provenant du dispositif de commande, le deuxième identifiant étant associé au contenu multimédia transcodé à générer par transcodage du contenu multimédia par le serveur de transcodage (TCS), et utilisable, par le dispositif de commande pour transmettre le deuxième identifiant fourni par le serveur de transcodage à un dispositif de restitution (DMR) à la place du premier identifiant dudit contenu multimédia fourni par le serveur de contenus, pour commander une restitution du contenu multimédia transcodé par ledit dispositif de restitution (DMR).

8. Serveur de transcodage selon la revendication 7, comprenant en outre des moyens pour recevoir dudit dispositif de commande UPnP des paramètres de transcodage dudit contenu multimédia référencé et pour générer le deuxième identifiant à partir desdits paramètres de transcodage.

9. Serveur de transcodage selon la revendication 7, dans lequel le deuxième identifiant comprend une identification d'une fonction de transcodage à appliquer au contenu multimédia référencé.

10. Serveur de transcodage selon la revendication 7, dans lequel le deuxième identifiant comprend le premier identifiant.

11. Serveur de transcodage selon la revendication 7, comprenant en outre des moyens pour fournir, audit dispositif de commande UPnP, une liste de fonctions de transcodage susceptibles d'être appliquées par le serveur de transcodage.

12. Serveur de transcodage selon l'une quelconque des revendications 7 à 11, ledit serveur étant mis en oeuvre sous forme de service UPnP.

13. Equipement d'un réseau, intégrant un serveur de transcodage selon l'une quelconque des revendications 7 à 12.

14. Procédé de commande de restitution, le procédé étant mis en oeuvre par un dispositif de commande UPnP (ADMC) et comprenant
- une étape de réception, en provenance d'un serveur de contenus (DMS), d'un premier identifiant d'un contenu multimédia à restituer,
- une étape d'envoi, à un serveur de transcodage (TCS) une commande identifiant le contenu multimédia au moyen du premier identifiant,
- une étape d'obtention d'un deuxième identifiant, auprès du serveur de transcodage (TCS), l'étape d'obtention du deuxième identifiant étant réalisée suite à l'étape d'envoi du premier identifiant au serveur de transcodage par des moyens pour envoyer ladite commande, le deuxième identifiant étant associé à un contenu multimédia transcodé à générer par transcodage du contenu multimédia par le serveur de transcodage,
- une étape de commande pour commander une restitution dudit contenu multimédia transcodé par un dispositif de restitution (DMR) utilisant le deuxième identifiant à la place du premier identifiant en transmettant le deuxième identifiant au dispositif de restitution.

15. Procédé de transcodage (TCS) d'un contenu multimédia à restituer, référencé par un serveur de contenus (DMS) d'un réseau, le procédé étant mis en oeuvre par un serveur de transcodage conçu pour fournir un contenu multimédia transcodé généré par transcodage du contenu multimédia,
le procédé comprenant
- une étape de génération et d'envoi d'un deuxième identifiant à un dispositif de commande UPnP (ADMC) du réseau, suite à une réception d'un premier identifiant du contenu multimédia provenant du dispositif de commande UPnP (ADMC), le deuxième identifiant étant associé au contenu multimédia transcodé à générer par transcodage du contenu multimédia par le serveur de transcodage et utilisable, par le dispositif de commande UPnP à la place du premier identifiant dudit contenu multimédia fourni par le serveur de contenus, pour commander une restitution du contenu multimédia transcodé par un dispositif de restitution (DMR).

## Patentansprüche

1. UPnP-Steuervorrichtung (ADMC) eines Netzwerks, enthaltend
- Einrichtungen, um eine erste Kennung eines wiederzugebenden Multimedia-Inhalts von einem Inhaltsserver (DMS) zu empfangen,
- Einrichtungen, um einen Befehl an einen Transcodierserver (TCS) zu senden, der den Multimedia-Inhalt mittels der ersten Kennung erkennt,
- Einrichtungen, um eine zweite Kennung beim Transcodierserver (TCS) zu erhalten, wobei die Einrichtungen zum Erhalt der zweiten Kennung außerdem geeignet sind, die zweite Kennung nach dem Senden der ersten Kennung an den Transcodierserver durch die Einrichtungen zum Senden des Befehls zu empfangen, wobei die zweite Kennung einem durch Transcodierung des Multimedia-Inhalts durch den Transcodierserver (TCS) zu erzeugenden transcodierten Multimedia-Inhalt zugeordnet ist,
- Einrichtungen, um eine Wiedergabe des transcodierten Multimedia-Inhalts durch eine Wiedergabevorrichtung (DMR) zu befehlen, wobei die Befehlseinrichtungen die erhaltene zweite Kennung anstelle der ersten Kennung verwenden, indem sie die zweite Kennung an die Wiedergabevorrichtung übertragen.

2. Vorrichtung nach Anspruch 1, wobei die zweite Kennung den Transcodierserver als die Entität bezeichnet, bei der der transcodierte Multimedia-Inhalt erhalten werden kann.

3. Vorrichtung nach Anspruch 1, die außerdem Einrichtungen enthält, um Transcodierparameter an den Transcodierserver (TCS) zu übertragen, um im Gegenzug die zweite Kennung zu erhalten.

4. Vorrichtung nach Anspruch 1, die außerdem Einrichtungen enthält, um dem transcodierten Multimedia-Inhalt zugeordnete Metadaten an die Wiedergabevorrichtung zu übertragen, die durch Änderung der Metadaten des referenzierten Inhalts erzeugt werden.

5. Vorrichtung nach Anspruch 1, die außerdem Einrichtungen enthält, um vom Transcodierserver eine Liste von Transcodierfunktionen zu erhalten, die vom Transcodierserver angewendet werden können.

6. Vorrichtung nach Anspruch 1, die außerdem Einrichtungen enthält, um das Vorhandensein des Transcodierservers im Netzwerk zu erfassen.

7. Transcodierserver (TCS) eines Netzwerks, der enthält
- Transcodiereinrichtungen, um durch Transcodierung eines von einem Inhaltsserver (DMS) des Netzwerks referenzierten Multimedia-Inhalts einen transcodierten Multimedia-Inhalt zu erzeugen;
- Einrichtungen, um nach einem Empfang einer von der Steuervorrichtung kommenden ersten Kennung des Multimedia-Inhalts eine zweite Kennung zu erzeugen und an eine UPnP-Steuervorrichtung (ADMC) des Netzwerks zu liefern, wobei die zweite Kennung dem durch Transcodierung des Multimedia-Inhalts durch den Transcodierserver (TCS) zu erzeugenden transcodierten Multimedia-Inhalt zugeordnet und durch die Steuervorrichtung verwendbar ist, um die vom Transcodierserver gelieferte zweite Kennung anstelle der vom Inhaltsserver gelieferten ersten Kennung des Multimedia-Inhalts an eine Wiedergabevorrichtung (DMR) zu übertragen, um eine Wiedergabe des transcodierten Multimedia-Inhalts durch die Wiedergabevorrichtung zu befehlen.

8. Transcodierserver nach Anspruch 7, der außerdem Einrichtungen enthält, um Transcodierparameter des referenzierten Multimedia-Inhalts von der UPnP-Steuervorrichtung zu empfangen, und um die zweite Kennung ausgehend von den Transcodierparametern zu erzeugen.

9. Transcodierserver nach Anspruch 7, wobei die zweite Kennung eine Erkennung einer an den referenzierten Multimedia-Inhalt anzuwendenden Transcodierfunktion enthält.

10. Transcodierserver nach Anspruch 7, wobei die zweite Kennung die erste Kennung enthält.

11. Transcodierserver nach Anspruch 7, der außerdem Einrichtungen enthält, um eine Liste von Transcodierfunktionen an die UPnP-Steuervorrichtung zu liefern, die vom Transcodierserver angewendet werden können.

12. Transcodierserver nach einem der Ansprüche 7 bis 11, wobei der Server in Form eines UPnP-Diensts eingesetzt wird.

13. Netzwerkausrüstung, in die ein Transcodierserver nach einem der Ansprüche 7 bis 12 integriert ist.

14. Verfahren zur Wiedergabesteuerung, wobei das Verfahren von einer UPnP-Steuervorrichtung (ADMC) durchgeführt wird und enthält
- einen Schritt des Empfangs, von einem Inhaltsserver (DMS) kommend, einer ersten Kennung eines wiederzugebenden Multimedia-Inhalts,
- einen Schritt des Sendens eines Befehls an einen Transcodierserver (TCS), der den Multimedia-Inhalt mittels der ersten Kennung erkennt,
- einen Schritt des Erhalts einer zweiten Kennung beim Transcodierserver (TCS), wobei der Schritt des Erhalts der zweiten Kennung nach dem Schritt des Sendens der ersten Kennung an den Transcodierserver durch Einrichtungen zum Senden des Befehls erfolgt, wobei die zweite Kennung einem durch Transcodierung des Multimedia-Inhalts durch den Transcodierserver zu erzeugenden transcodierten Multimedia-Inhalt zugeordnet ist,
- einen Steuerschritt, um eine Wiedergabe des transcodierten Multimedia-Inhalts durch eine Wiedergabevorrichtung (DMR) zu befehlen, die die zweite Kennung anstelle der ersten Kennung verwendet, indem die zweite Kennung an die Wiedergabevorrichtung übertragen wird.

15. Transcodierverfahren (TCS) eines von einem Inhaltsserver (DMS) eines Netzwerks referenzierten wiederzugebenden Multimedia-Inhalts, wobei das Verfahren von einem Transcodierserver eingesetzt wird, der konzipiert ist, um einen durch Transcodierung des Multimedia-Inhalts erzeugten transcodierten Multimedia-Inhalt zu liefern, wobei das Verfahren enthält
- einen Schritt der Erzeugung und des Sendens einer zweiten Kennung an eine UPnP-Steuervorrichtung (ADMC) des Netzwerks nach einem Empfang einer von der UPnP-Steuervorrichtung (ADMC) kommenden ersten Kennung des Multimedia-Inhalts, wobei die zweite Kennung dem durch Transcodierung des Multimedia-Inhalts durch den Transcodierserver zu erzeugenden transcodierten Multimedia-Inhalt zugeordnet und von der UPnP-Steuervorrichtung anstelle der vom Inhaltsserver gelieferten ersten Kennung des Multimedia-Inhalts verwendbar ist, um eine Wiedergabe des transcodierten Multimedia-Inhalts durch eine Wiedergabevorrichtung (DMR) zu befehlen.

## Claims

1. UPnP control device (ADMC) of a network, comprising
- means for receiving, from a content server (DMS), a first identifier of a multimedia content to be rendered,
- means for sending, to a transcoding server (TCS), a command identifying the multimedia content by way of the first identifier,
- means for obtaining a second identifier from the transcoding server (TCS), the means for obtaining the second identifier furthermore being designed to receive the second identifier following the sending of the first identifier to the transcoding server by the means for sending said command, the second identifier being associated with a transcoded multimedia content to be generated by transcoding of the multimedia content by the transcoding server (TCS),
- means for controlling rendering of said transcoded multimedia content by a rendering device (DMR), the control means using the obtained second identifier instead of the first identifier by transmitting the second identifier to the rendering device.

2. Device according to Claim 1, wherein the second identifier designates said transcoding server as being the entity from which the transcoded multimedia content is able to be obtained.

3. Device according to Claim 1, furthermore comprising means for transmitting, to the transcoding server (TCS), transcoding parameters in order to obtain the second identifier in return.

4. Device according to Claim 1, furthermore comprising means for transmitting, to said rendering device, metadata associated with the transcoded multimedia content, which metadata are generated by modifying metadata of the referenced content.

5. Device according to Claim 1, furthermore comprising means for obtaining, from the transcoding server, a list of transcoding functions able to be applied by the transcoding server.

6. Device according to Claim 1, furthermore comprising means for detecting the presence, in the network, of said transcoding server.

7. Transcoding server (TCS) of a network, comprising
- transcoding means for generating a transcoded multimedia content by transcoding a multimedia content referenced by a content server (DMS) of said network;
- means for generating and supplying a second identifier to a UPnP control device (ADMC) of the network, following reception of a first identifier of the multimedia content from the control device, the second identifier being associated with the transcoded multimedia content to be generated by transcoding of the multimedia content by the transcoding server (TCS) and being able to be used by the control device to transmit said second identifier supplied by the transcoding server to a rendering device (DMR) instead of the first identifier of said multimedia content supplied by the content server, to control rendering of the transcoded multimedia content by said rendering device.

8. Transcoding server according to Claim 7, furthermore comprising means for receiving, from said UPnP control device, transcoding parameters for said referenced multimedia content and for generating the second identifier on the basis of said transcoding parameters.

9. Transcoding server according to Claim 7, wherein the second identifier comprises an identification of a transcoding function to be applied to the referenced multimedia content.

10. Transcoding server according to Claim 7, wherein the second identifier comprises the first identifier.

11. Transcoding server according to Claim 7, furthermore comprising means for supplying, to said UPnP control device, a list of transcoding functions able to be applied by the transcoding server.

12. Transcoding server according to any one of Claims 7 to 11, said server being implemented in the form of a UPnP service.

13. Device of a network, incorporating a transcoding server according to any one of Claims 7 to 12.

14. Rendering control method, the method being implemented by a UPnP control device (ADMC) and comprising
- a step of receiving, from a content server (DMS), a first identifier of a multimedia content to be rendered,
- a step of sending, to a transcoding server (TCS), a command identifying the multimedia content by way of the first identifier,
- a step of obtaining a second identifier from the transcoding server (TCS), the step of obtaining the second identifier being performed following the step of sending the first identifier to the transcoding server by means for sending said command, the second identifier being associated with a transcoded multimedia content to be generated by transcoding of the multimedia content by the transcoding server,
- a control step for controlling rendering of said transcoded multimedia content by a rendering device (DMR) using the second identifier instead of the first identifier by transmitting the second identifier to the rendering device.

15. Method for transcoding (TCS) a multimedia content to be rendered, referenced by a content server (DMS) of a network, the method being implemented by a transcoding server designed to supply a transcoded multimedia content generated by transcoding of the multimedia content, the method comprising
- a step of generating and of sending a second identifier to a UPnP control device (ADMC) of the network, following reception of a first identifier of the multimedia content from the UPnP control device (ADMC),
the second identifier being associated with the transcoded multimedia content to be generated by transcoding of the multimedia content by the transcoding server and being able to be used by the UPnP control device instead of the first identifier of said multimedia content supplied by the content server, to control rendering of the transcoded multimedia content by a rendering device (DMR).
